# DEMANDE DE BREVET EUROPEEN

(11) **EP 3 896 634 A1**
(43) Date de publication de la demande: **20.10.2021**
(21) Numéro de dépôt: 21167837.0
(22) Date de dépôt: 12.04.2021
(51) Int. Cl.: G06Q 20/02, G06Q 20/38, G06Q 40/00, G06Q 50/26

(54) **PROCEDE DE TRAITEMENT D'UNE TRANSACTION EFFECTUEE PAR UNE ENTITE DEBITRICE AUPRES D'UNE ENTITE CREDITRICE CIBLE**

(30) Priorité: 14.04.2020 FR 2003723
(71) Demandeur: Idemia Identity & Security France, 92400 Courbevoie (FR)
(72) Inventeur: ADJAZ, Aghiles, 92400 COURBEVOIE (FR)
(74) Mandataire: Regimbeau

(57) **Abrégé**

La présente invention concerne un procédé de traitement d'une transaction effectuée par une entité débitrice (1) auprès d'une entité créditrice cible (2a) d'un ensemble d'entités créditrices (2a, 2b), le procédé comprenant des étapes de :
(a) génération par des moyens de traitement de données (21) de l'entité créditrice cible (2a) d'un cryptogramme comprenant des données descriptives de la transaction, ledit cryptogramme étant :
- chiffré en utilisant une clé publique d'une entité d'autorité (4) ;
- signé en utilisant une clé privée de l'entité créditrice cible (2a) ;
et transmission dudit cryptogramme à une entité de confiance (3) ;
(b) vérification par des moyens de traitement de données (31) de l'entité de confiance (3) de la signature dudit cryptogramme en utilisant une clé publique de l'entité créditrice cible (2a), et transmission du cryptogramme non signé à l'entité d'autorité (4) ;
(c) déchiffrement par des moyens de traitement de données (41) de l'entité d'autorité (4) dudit cryptogramme en utilisant une clé privée de l'entité d'autorité (4) de sorte à accéder auxdites données descriptives de la transaction, et traitement desdites données descriptives de la transaction.

## Description

### DOMAINE DE L'INVENTION

La présente invention concerne un procédé de de traitement d'une transaction entre une entité débitrice et une entité créditrice, en particulier pour garantir cette transaction auprès d'une entité d'autorité.

### ETAT DE LA TECHNIQUE

Dans de nombreuses situations, un tiers en particulier gouvernemental peut être amené à vérifier qu'une transaction entre deux entités ait bien eu lieu.

Par exemple, en fiscalité, les particuliers peuvent bénéficier de réductions/crédits d'impôt accordées au titre de dons qu'ils ont faits (auprès d'associations, partis politiques, syndicats, etc.) de dépenses sociales (frais de garde d'enfants, d'emploi à domicile, etc.), d'investissements (construction de logement neufs, rénovation énergétique, etc.), ou autres, sur simple déclaration.

Plus précisément, le particulier déclare simplement sur l'honneur les montants correspondants dans sa déclaration de revenus, et les justificatifs sont quelques fois réclamés à posteriori notamment en cas de contrôle.

Le problème est qu'on constate une hausse continue de ces transactions ouvrant réduction d'impôt, cachant très probablement une fraude élevée.

Pour s'assurer qu'il n'y a pas de fraude, il pourrait être exigé systématiquement la fourniture d'un justificatif lors de la déclaration, mais cela serait d'une part très lourd en termes de volume de données à transmettre et de temps de vérification, et d'autre part extrêmement problématique en terme de vie privée puisque l'état pourrait par exemple connaître tous les donateurs de chaque parti politique.

Il serait ainsi souhaitable de disposer d'une nouvelle solution permettant de garantir auprès d'une entité dite d'autorité qu'une entité donnée a bien effectué une transaction auprès d'un entité tierce sans pour autant divulguer quelle est cette entité tierce, et qui soit en outre universelle, sécurisée et facile à mettre en œuvre.

### EXPOSE DE L'INVENTION

La présente invention se rapporte ainsi selon un premier aspect à un procédé de traitement d'une transaction effectuée par une entité débitrice auprès d'une entité créditrice cible d'un ensemble d'entités créditrices, le procédé comprenant des étapes de :
(a) génération par des moyens de traitement de données de l'entité créditrice cible d'un cryptogramme comprenant des données descriptives de la transaction, ledit cryptogramme étant :
   - chiffré en utilisant une clé publique d'une entité d'autorité ;
   - signé en utilisant une clé privée de l'entité créditrice cible ;
   et transmission dudit cryptogramme à une entité de confiance ;
(b) vérification par des moyens de traitement de données de l'entité de confiance de la signature dudit cryptogramme en utilisant une clé publique de l'entité créditrice cible, et transmission du cryptogramme non signé à l'entité d'autorité ;
(c) déchiffrement par des moyens de traitement de données de l'entité d'autorité dudit cryptogramme en utilisant une clé privée de l'entité d'autorité de sorte à accéder auxdites données descriptives de la transaction, et traitement desdites données descriptives de la transaction.

Selon d'autres caractéristiques avantageuses et non-limitatives :
L'entité de confiance dispose d'une clé publique maitresse de l'ensemble d'entités créditrices, l'étape (c) comprenant la dérivation de ladite clé publique de l'entité créditrice cible à partir de la clé publique maitresse de l'ensemble d'entités créditrices.

Un identifiant de l'entité créditrice cible est transmis à l'entité de confiance à l'étape (a) avec ledit cryptogramme ; la dérivation de ladite clé publique de l'entité créditrice cible à l'étape (c) utilisant ledit identifiant de l'entité créditrice cible.

Ladite clé privée de l'entité créditrice cible est dérivée à partir d'une clé privée maitresse de l'ensemble d'entités créditrices.

L'entité créditrice cible et l'entité de confiance ne disposent initialement d'aucune clé, le procédé comprenant la mise en œuvre par les moyens de traitement de données de l'entité d'autorité d'une étape antérieure (a0) de dérivation de ladite clé privée de l'entité créditrice cible à partir de la clé privée maitresse de l'ensemble d'entités créditrices ; transmission à l'entité créditrice cible de sa clé privée dérivée et de la clé publique de l'entité d'autorité ; et transmission à l'entité de confiance de la clé publique maitresse de l'ensemble d'entités créditrices.

L'étape (a0) comprend la génération préalable de la paire de clés publique et privée de l'entité d'autorité et de la paire de clés publique et privée maitresses de l'ensemble d'entités créditrices.

Lesdites clés de l'entité créditrice cible ou de l'ensemble d'entités créditrices sont de type hiérarchique déterministe.

Lesdites données descriptives de la transaction comprennent un identifiant de l'entité débitrice et un montant de la transaction, éventuellement une information temporelle.

Lesdites données descriptives de la transaction ne comprennent aucun identifiant de l'entité créditrice cible.

Selon un deuxième aspect, l'invention concerne un système de traitement d'une transaction effectuée par une entité débitrice auprès d'une entité créditrice cible d'un ensemble d'entités créditrices, comprenant ladite entité créditrice cible, une entité de confiance et une entité d'autorité connectées, caractérisé en ce que :
∘ l'entité créditrice cible comprend des moyens de traitement de données configurés pour générer un cryptogramme comprenant des données descriptives de la transaction, ledit cryptogramme étant chiffré en utilisant une clé publique d'une entité d'autorité et signé en utilisant une clé privée de l'entité créditrice cible ; et transmettre ledit cryptogramme à l'entité de confiance ;
∘ l'entité de confiance comprend des moyens de traitement de données configurés pour vérifier la signature dudit cryptogramme en utilisant une clé publique de l'entité créditrice cible ; et transmettre le cryptogramme non signé à l'entité d'autorité ;
∘ l'entité d'autorité comprend des moyens de traitement de données configurés pour déchiffrer ledit cryptogramme en utilisant une clé privée de l'entité d'autorité de sorte à accéder auxdites données descriptives de la transaction ; et traiter lesdites données descriptives de la transaction.

Selon un troisième et un quatrième aspect, l'invention concerne un programme d'ordinateur comprenant des instructions de code pour l'exécution d'un procédé selon le premier aspect de traitement d'une transaction effectuée par une entité débitrice auprès d'une entité créditrice cible d'un ensemble d'entités créditrices ; et un moyen de stockage lisible par un équipement informatique sur lequel un produit programme d'ordinateur comprend des instructions de code pour l'exécution d'un procédé selon le premier aspect de traitement d'une transaction effectuée par une entité débitrice auprès d'une entité créditrice cible d'un ensemble d'entités créditrices.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
- La figure 1 représente de manière schématique un système de traitement d'une transaction pour la mise en œuvre du procédé selon l'invention.
- La figure 2 est un organigramme d'étapes d'un mode de réalisation du procédé de traitement d'une transaction selon l'invention.
Sur l'ensemble des figures, les éléments similaires portent des références identiques.

### DESCRIPTION DETAILLEE DE L'INVENTION

### Architecture

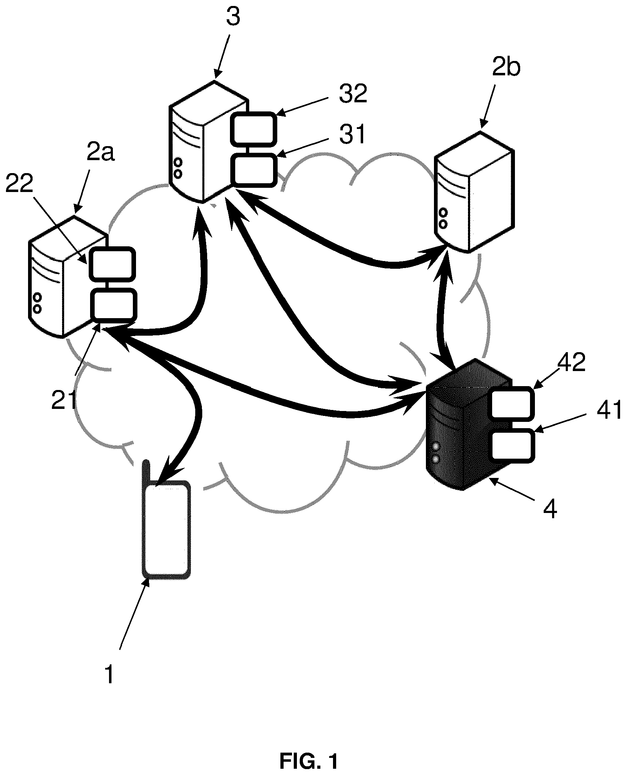

En référence à la **figure 1****,** on a représenté schématiquement une architecture pour la mise en œuvre du présent procédé de traitement d'une transaction effectué par une entité débitrice 1 auprès d'une entité créditrice cible 2a d'un ensemble d'entités créditrices 2a, 2b, en d'autres termes une transaction entre l'entité débitrice 1 et une des entités créditrices 2a, 2b.

Par entité « débitrice », on entend l'entité à l'origine de la transaction qui transmet une somme d'argent à l'entité « créditrice » qui reçoit cet argent. Dans la plupart des exemples qui vont être présentés dans la suite de la description l'entité débitrice est un particulier (mais ce peut être une entreprise, un organisme public, etc.), disposant généralement d'un équipement personnel tel qu'un ordinateur, un terminal, etc.

La transaction peut être un simple don (alors l'entité débitrice est un donateur et l'entité créditrice un donataire tel qu'une association, un parti politique, un syndicat, etc.), ou bien le paiement d'une prestation qu'effectue l'entité créditrice auprès de l'entité débitrice en échange (par exemple des travaux, la garde d'un enfant, la vente d'un produit, etc.).

On désigne comme « ensemble » d'entités créditrices 2a, 2b une pluralité d'entités créditrices possibles, ledit ensemble étant préférentiellement prédéterminé. Par exemple, l'ensemble des organismes pouvant recevoir un don ouvrant droit à une réduction d'impôt est listé précisément. L'entité créditrice 2a qui en l'espèce est le bénéficiaire de la transaction dont il est question est par commodité désigné entité créditrice « cible ». Dans la figure 1, on a arbitrairement choisi l'entité créditrice 2a comme celle cible et l'entité créditrice 2b est quant à elle étrangère à la transaction (mais pourra tout à fait être entité créditrice cible d'une autre transaction).

Ledit « traitement » de la transaction dont il est question est destiné à être mis en œuvre par une entité dite d'autorité 4, par exemple gouvernementale. Plus précisément, ledit procédé vise à garantir auprès de l'entité d'autorité 4 que la transaction a bien eu lieu, sans pour autant divulguer quelle est l'entité créditrice cible 2a. Pour reformuler encore, l'entité d'autorité 4 peut avoir l'assurance qu'une transaction a été effectuée par l'entité débitrice 1 auprès d'une entité dudit ensemble d'entités créditrices 2a, 2b mais sans savoir laquelle (et donc par exemple être assuré qu'un don a bien été fait auprès d'un organisme éligible).

Le présent procédé permet donc d'éviter toute fraude (il est impossible de déclarer auprès de l'entité d'autorité une transaction fictive), garantit la vie privée des utilisateurs (on sait juste que l'entité créditrice cible 2a fait partie de l'ensemble d'entités créditrices 2a, 2b), est automatisé, et comme on le verra simple et sécurisé. Aucun justificatif n'a besoin d'être transmis, et la transaction peut être prise en compte sans qu'aucune déclaration n'ait besoin d'être faite par l'entité débitrice 1, ce qui lui permet d'être assurée d'avoir le bénéfice de la transaction (il est courant que des individus oublient de déclarer certains dons et ainsi perdent des réductions d'impôts auxquels ils avaient pourtant légalement droit).

Dans la suite de la présente description, on prendra l'exemple d'une transaction ouvrant un crédit ou une réduction d'impôt (i.e. tout ou partie déductible), mais le présent procédé est applicable à de nombreuses situations dans lesquels on doit garantir de façon anonyme qu'une transaction a eu lieu, par exemple pour l'utilisation d'une carte cadeau/ticket restaurant/coffret cadeau, etc.

Une dernière entité dite de confiance 3 est impliquée, en particulier un tiers reconnu par l'entité d'autorité 4 et les entités créditrices 2a, 2b, par exemple un fournisseur de solution de sécurité. C'est cette entité qui va être principalement sollicitée de sorte que la mise en œuvre du procédé soit la plus légère possible pour toutes les autres entités 1, 2a, 2b, 4.

Par commodité, on confondra dans la suite de la présente description chaque entité 1, 2a, 2b, 3 et 4 avec un équipement détenu et contrôlé par cette entité. On suppose que tous ces équipements sont connectés par un réseau 20 tel qu'internet, et qu'ils comprennent une interface de communication lui permettant de dialoguer à distance avec les autres équipements. A ce titre, les références numériques sur la figure 1 correspondent à ces équipements.

L'équipement correspondant à l'entité débitrice 1 est comme expliqué avantageusement un équipement personnel à un individu, comme par exemple son téléphone mobile, ou « smartphone », une tablette électronique ou encore un ordinateur personnel. Les équipements associés aux autres entités 2a, 2b, 3 et 4 sont typiquement des serveurs distants comportant des moyens de traitement de données 21, 31, 41, i.e. un calculateur tel que par exemple un processeur, un microprocesseur, un contrôleur, un microcontrôleur, un FPGA etc. Ce calculateur est adapté pour exécuter des instructions de code pour mettre en œuvre le procédé ci-après.

Chaque équipement peut également comprendre des moyens de stockage de données 22, 32, 42 (une mémoire, par exemple flash) une interface utilisateur, etc.

### Transactions

On suppose comme expliqué que la transaction est émise depuis l'entité débitrice 1 à destination de l'entité créditrice cible 2a, et cette dernière collecte des données descriptives de la transaction (de la même manière qu'auparavant elle générait une attestation qu'elle transmettait à l'entité débitrice 1).

En effet la fraude ne peut venir que de l'entité débitrice 1 car une entité créditrice 2a, 2b n'aurait rien à gagner et tout à perdre de soutenir qu'une transaction fictive a eu lieu. Ainsi, on peut faire confiance à l'entité créditrice cible 2a dans la collecte desdites données descriptives de la transaction.

Lesdites données descriptives de la transaction comprennent en particulier au moins un montant de la transaction et un identifiant de l'entité débitrice 1, et préférentiellement une information temporelle (timestamp, i.e. un horodatage). A noter qu'il est préférable que ces données descriptives excluent un identifiant de l'entité créditrice cible 2a, même si ce dernier sera utilisé séparément, voir plus loin.

De manière préférée, tout est automatique. Par exemple, l'entité débitrice 1 peut ouvrir un portail (mis en œuvre par l'entité créditrice cible 2a) sur son interface, et saisir des informations bancaires pour paiement en ligne (montant et numéro de carte bancaire si l'on fait un don). L'entité créditrice cible 2a est alors notifiée de la transaction, ladite notification comprenant toutes les informations possibles relatives à la transaction. L'entité créditrice cible 2a n'a plus qu'à sélectionner celles d'intérêt.

On suppose en outre au moment où la transaction a été effectuée que :
- l'entité créditrice cible 2a (et préférentiellement chaque entité créditrice 2a, 2b dudit ensemble) dispose de :
   ∘ une clé publique de l'entité d'autorité 4 ;
   ∘ sa propre clé privée (différente entre deux entités créditrices 2a, 2b) ;
- l'entité de confiance 3 dispose d'une clé publique de l'entité créditrice cible 2a (ou du moins d'une façon d'obtenir cette clé publique, voir plus loin) ;
- l'entité d'autorité 4 dispose de sa clé privée.

Lesdites clés privée et clé publiques s'entendent dans un contexte de chiffrement asymétrique avec à chaque fois on a une paire d'une clé publique et d'une clé privée générées ensemble. On pourra prendre n'importe quel protocole connu tel que RSA ou sur courbes elliptiques en particulier pour les clés de l'entité d'autorité 4, car en effet un mode de réalisation préféré sera décrit plus loin pour les clés d'entité créditrice 2a, 2b.

### Procédé

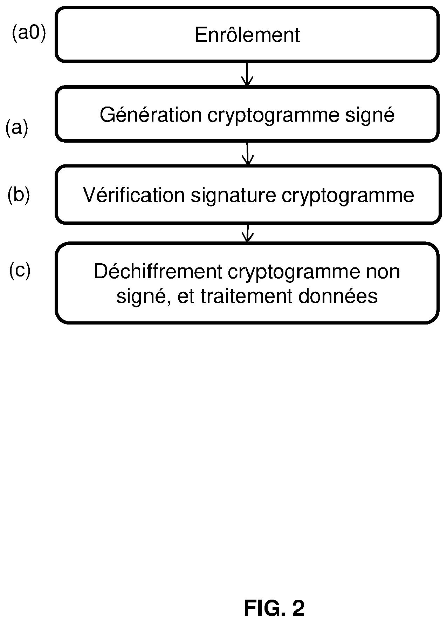

En référence à la **figure 2****,** le présent procédé commence par une étape (a) de génération par les moyens de traitement de données 21 de l'entité créditrice cible 2a d'un cryptogramme comprenant les données descriptives de la transaction, ledit cryptogramme étant :
- chiffré en utilisant la clé publique d'une entité d'autorité 4 ;
- signé en utilisant la clé privée de l'entité créditrice cible 2a.

En général cette étape est réalisée en trois fois : tout d'abord on génère le « conteneur » à la base du cryptogramme dans lequel on insère les données descriptives de la transaction (en particulier identifiant de l'entité débitrice 1, montant et avantageusement timestamp), ensuite on chiffre ce conteneur avec la clé publique d'une entité d'autorité 4 de sorte à obtenir le cryptogramme, et enfin on le signe grâce à ladite clé privée de l'entité créditrice cible 2a (de toute manière connue, par exemple en chiffrant une empreinte cryptographique du cryptogramme (obtenue via une fonction de hachage), par exemple conformément à DSA.

Le cryptogramme signé est alors transmis à l'entité de confiance 3, préférentiellement sous la forme d'un message contenant également un identifiant de l'entité créditrice cible 2a (de sorte à pouvoir l'identifier parmi l'ensemble des entités créditrices 2a, 2b, même si cet identifiant reste optionnel puisque l'entité de confiance 3 peut supposer que l'entité créditrice cible 2a est l'expéditeur du message - même si un faux message était créé en usurpant un identifiant réel d'une entité créditrice 2a, 2b, la signature resterait invalide en l'absence de la clé privée associée). En d'autres termes, le message contient au maximum :
- le cryptogramme ;
- sa signature ;
- l'identifiant de l'entité créditrice cible 2a.

On comprend que la signature et l'identifiant de l'entité créditrice cible 2a ne sont pas chiffrés par la clé publique d'une entité d'autorité 4, i.e. sont « en clair ».

Dans une étape subséquente (b), les moyens de traitement de données 31 de l'entité de confiance 3 vérifient la signature dudit cryptogramme en utilisant la clé publique de l'entité créditrice cible 2a. Une telle vérification de signature est très classique, et permet à l'entité de confiance de s'assurer qu'il vient bien de l'entité créditrice cible 2a et pas frauduleusement de l'entité débitrice 1 par exemple. Par ailleurs, on note que l'entité de confiance 3 ne dispose pas de la clé privée de l'entité d'autorité 4, de sorte qu'elle ne peut pas déchiffrer le cryptogramme et lire les données qu'il contient, et ainsi la vie privée de l'entité débitrice 1 est préservée.

Le cryptogramme peut alors être retransmis à l'entité d'autorité 4 non signé. Par « non signé », on entend que le cryptogramme est renvoyé seul, sans sa signature (et cela va de soi, sans l'identifiant de l'entité créditrice cible 2a). En d'autres termes, le cryptogramme est anonymisé puisqu'il n'est plus associé à une donnée permettant de le relier à l'entité créditrice cible 2a. Dans la mesure où l'entité 3 est de confiance, l'entité d'autorité 4 sait que la provenance du cryptogramme a été vérifiée (i.e. qu'il a été généré par une entité de l'ensemble d'entités créditrices 2a, 2b) si on le lui transmet, de sorte qu'elle s'accommode de l'absence de toute information permettant d'identifier l'entité créditrice cible 2a.

Enfin, dans une étape finale (d), les moyens de traitement de données 41 de l'entité d'autorité 4 déchiffrent ledit cryptogramme en utilisant la clé privée de l'entité d'autorité, et ainsi accèdent à son contenu, i.e. les données descriptives de la transaction. On répète que le cryptogramme ne contient aucune donnée permettant d'identifier l'entité créditrice cible 2a, seulement celles permettant d'identifier l'entité débitrice 1. L'étape (d) comprend enfin le traitement desdites données descriptives de la transaction extraites du cryptogramme.

Ce traitement peut être fait de toute manière connue, et à toute fin que l'entité d'autorité jugera utile. Par exemple l'entité d'autorité 4 peut simplement vérifier une déclaration de la transaction par l'entité débitrice 1 (sans que ce dernier n'ait à fournir d'attestation), notifier à l'entité débitrice 1 que cette transaction a été portée à la connaissance de l'entité d'autorité 4, voire automatiquement prendre en compte cette transaction de manière préférée.

En effet, la totalité du présent procédé peut être mise en œuvre dans les minutes suivant l'initiation de la transaction par l'entité débitrice 1, i.e. bien avant qu'une déclaration n'ait besoin d'être faite auprès de l'entité d'autorité 4.

Dans l'exemple d'un traitement des données descriptives de la transaction à des fins fiscales, l'entité d'autorité 4 peut ainsi pré-remplir les cases associées dans la déclaration de revenu (comme pour les salaires par exemple). En d'autres termes, il n'est plus nécessaire de déclarer manuellement tous les dons où autres dépenses éligibles à des réductions fiscales, cela est fait tout seul de manière fiable et efficace. Naturellement la possibilité de modifier les cases (en cas d'erreur) reste ouverte, mais l'entité d'autorité 4 peut être amenées en réponse à contrôler l'entité débitrice et lui exiger de manière classique les attestations.

L'homme du métier saura transposer ce cas d'espèce à tout contexte de transaction émise depuis l'entité débitrice 1 à destination de l'entité créditrice cible 2a et devant être garantie auprès d'une entité d'autorité 4.

### Clé maitresse

Comme expliqué, le présent procédé vise à ce que l'entité d'autorité 4 délègue auprès de l'entité de confiance 4 la vérification que la transaction a bien été faite auprès d'une entité créditrice reconnue (appartenant audit ensemble d'entités créditrices 2a, 2b).

Cela implique en théorie que l'entité de confiance 3 dispose de base des clés publiques de toutes les entités créditrices 2a, 2b de l'ensemble, ce qui est lourd et complexe à manipuler puisqu'il peut y avoir des dizaines voire des centaines de milliers d'entités créditrices 2a, 2b, et cet ensemble peut évoluer.

Par conséquent, de manière particulièrement préférée, l'entité de confiance 3 dispose juste d'une clé publique maitresse de l'ensemble d'entités créditrices 2a, 2b, l'étape (c) comprend la dérivation de ladite clé publique de l'entité créditrice cible 2a à partir de la clé publique maitresse de l'ensemble d'entités créditrices 2a, 2b.

Par clé « maîtresse » ou « parente » (en anglais master key) on entend une clé à partir de laquelle il est possible de générer un nombre illimité de clés « esclave » ou « enfant », généralement à partir d'une graine (plus précisément, cette graine permet de générer la clé maîtresse, et à partir de là chaque clé esclave). Il n'est alors nécessaire que de transmettre la clé publique maitresse de l'ensemble d'entités créditrices 2a, 2b à l'entité de confiance 3 et cette dernière est ainsi capable sur demande de retrouver la clé publique individuelle de chaque entités créditrices 2a, 2b, dont celle de l'entité créditrice cible 2a, tout en ayant la certitude que cette clé publique est bien celle complémentaire de la clé privée de l'entité créditrice cible 2a.

Typiquement, un identifiant de l'entité créditrice cible 2a est transmis à l'entité de confiance 3 à l'étape (a) avec ledit cryptogramme (ou simplement déterminé par l'entité de confiance 3), et la dérivation de ladite clé publique de l'entité créditrice cible 2a utilise ledit identifiant de l'entité créditrice cible 2a.

Similairement, ladite clé privée de l'entité créditrice cible 2a (et avantageusement chaque clé privée d'une entité créditrice 2a, 2b) est dérivée à partir d'une clé privée maitresse de l'ensemble d'entités créditrices 2a, 2b. Plus précisément, on génère une paire de clés privée/publique maîtresses de l'ensemble d'entités créditrices 2a, 2b, et on dérive indépendamment les clés privées individuelles de chaque entité créditrice 2a, 2b de la clé privée maitresse de l'ensemble d'entités créditrices 2a, 2b, et les clés publiques individuelles de chaque entité créditrice 2a, 2b de la clé publiques maitresse de l'ensemble d'entités créditrices 2a, 2b (en utilisant le même identifiant d'entité créditrice 2a, 2b), de sorte à pouvoir obtenir autant de paires de clés privée/publique que d'entités créditrice 2a, 2b, et ce le cas échéant de manière décalée. On peut tout à fait rajouter ultérieurement des nouvelles entités dans l'ensemble d'entités créditrices 2a, 2b, et leur dériver des paires de clés privée/publique.

On citera l'exemple préféré des clés de type hiérarchique déterministe (en anglais hierachical deterministic keys), ou simplement « clés HD ». L'homme du métier saura générer/manipuler/dériver de telles clés.

### Enrôlement

S'il est nécessaire pour la mise en œuvre du procédé que l'entité créditrice cible 2a dispose de la clé publique de l'entité d'autorité 4 et de sa propre clé privée et que l'entité de confiance 3 dispose de la clé publique de l'entité créditrice cible 2a (ou directement de la clé publique maitresse de l'ensemble d'entités créditrice 2a, 2b), il est possible que ces entités 2a, 3 ne disposent initialement (avant la transaction) d'aucune clé.

Ainsi dans un mode de réalisation préféré, le procédé comprend une étape préalable (a0) « d'enrôlement » permettant la mise à disposition des clés par l'entité d'autorité 4. Cette étape peut être mise en œuvre longtemps avant le reste du procédé, et ne nécessite pas d'être réitérée à chaque occurrence du procédé (on peut par exemple prévoir une fois par an, voire même uniquement une seule fois à la mise en place du système. Toute nouvelle entité créditrice se verra par la suite attribuer une clé au cas par cas, voir plus loin).

Typiquement, cette étape comprend la mise en œuvre par les moyens de traitement de données 41 de l'entité d'autorité 4 de :
∘ la dérivation de ladite clé privée de l'entité créditrice cible 2a à partir de la clé privée maitresse de l'ensemble d'entités créditrices 2a, 2b;
∘ la transmission à l'entité créditrice cible 2a de sa clé privée dérivée et de la clé publique de l'entité d'autorité 4 ;
∘ la transmission à l'entité de confiance 3 de la clé publique maitresse de l'ensemble d'entités créditrices 2a, 2b.

Typiquement, cette étape comprend la génération préalable de :
∘ la paire de clés publique et privée de l'entité d'autorité 4 ;
∘ la paire de clés publique et privée maitresses de l'ensemble d'entités créditrices 2a, 2b (en particulier par la méthode hiérarchique déterministe dans le cas de clés HD).

A noter que si une nouvelle entité vient se rajouter à l'ensemble d'entités créditrices 2a, 2b, il suffit à l'entité d'autorité 4 de lui dériver une nouvelle clé privée, et la lui transmettre avec la clé publique de l'entité d'autorité 4 : grâce à l'utilisation des clés maitresses rien ne doit être retransmis à l'entité de confiance 3.

### Système d'équipements

Selon un deuxième aspect, est proposé un système de traitement d'une transaction effectuée par une entité débitrice 1 auprès d'une entité créditrice cible 2a d'un ensemble d'entités créditrices 2a, 2b pour la mise en œuvre du procédé selon le premier aspect.

Le système comprend ladite entité créditrice cible 2a (préférentiellement toutes les entités créditrices 2a, 2b), une entité de confiance 3 et une entité d'autorité 4 connectées. Il peut y avoir aussi dans le système l'entité débitrice 1 (et même un grand nombre d'entités débitrices). Chaque entité correspond à un équipement du réseau, typiquement des serveurs distants.

L'entité créditrice cible 2a comprend des moyens de traitement de données 21 configurés pour générer un cryptogramme comprenant des données descriptives de la transaction, ledit cryptogramme étant chiffré en utilisant une clé publique d'une entité d'autorité 4 et signé en utilisant une clé privée de l'entité créditrice cible 2a ; et transmettre ledit cryptogramme à l'entité de confiance 3.

L'entité de confiance 3 comprend des moyens de traitement de données 31 configurés pour vérifier la signature dudit cryptogramme en utilisant une clé publique de l'entité créditrice cible 2a ; et transmettre le cryptogramme non signé à l'entité d'autorité 4.

Les moyens de traitement de données 31 de l'entité de confiance 3 peuvent en outre être configurés pour dériver ladite clé publique de l'entité créditrice cible 2a à partir de la clé publique maitresse de l'ensemble d'entités créditrices 2a, 2b.

L'entité d'autorité 4 comprend des moyens de traitement de données 41 configurés pour déchiffrer ledit cryptogramme en utilisant une clé privée de l'entité d'autorité 4 de sorte à accéder auxdites données descriptives de la transaction ; et traiter lesdites données descriptives de la transaction.

Les moyens de traitement de données 41 de l'entité d'autorité 4 peuvent en outre être configurés pour :
∘ générer préalablement la paire de clés publique et privée de l'entité d'autorité 4, et une paire de clés publique et privée maitresses de l'ensemble d'entités créditrices 2a, 2b ;
∘ dériver ladite clé privée de l'entité créditrice cible 2a à partir de la clé privée maitresse de l'ensemble d'entités créditrices 2a, 2b;
∘ transmettre à l'entité créditrice cible 2a sa clé privée dérivée et la clé publique de l'entité d'autorité 4 ;
∘ transmettre à l'entité de confiance 3 la clé publique maitresse de l'ensemble d'entités créditrices 2a, 2b.

### Produit programme d'ordinateur

Selon un troisième et un quatrième aspects, l'invention concerne un produit programme d'ordinateur comprenant des instructions de code pour l'exécution (en particulier sur les moyens de traitement de données 21, 31, 41 des entités 2a, 3, 4) d'un procédé selon le premier aspect de l'invention de traitement d'une transaction effectuée par une entité débitrice 1 auprès d'une entité créditrice cible 2a d'un ensemble d'entités créditrices 2a, 2b, ainsi que des moyens de stockage lisibles par un équipement informatique (une mémoire des entités 2a, 3, 4) sur lequel on trouve ce produit programme d'ordinateur

## Revendications

1. Procédé de traitement d'une transaction effectuée par une entité débitrice (1) auprès d'une entité créditrice cible (2a) d'un ensemble d'entités créditrices (2a, 2b), le procédé comprenant des étapes de :
(a) génération par des moyens de traitement de données (21) de l'entité créditrice cible (2a) d'un cryptogramme comprenant des données descriptives de la transaction, ledit cryptogramme étant :
- chiffré en utilisant une clé publique d'une entité d'autorité (4) ;
- signé en utilisant une clé privée de l'entité créditrice cible (2a) ;
et transmission dudit cryptogramme à une entité de confiance (3) ;
(b) vérification par des moyens de traitement de données (31) de l'entité de confiance (3) de la signature dudit cryptogramme en utilisant une clé publique de l'entité créditrice cible (2a), et transmission du cryptogramme non signé à l'entité d'autorité (4) ;
(c) déchiffrement par des moyens de traitement de données (41) de l'entité d'autorité (4) dudit cryptogramme en utilisant une clé privée de l'entité d'autorité (4) de sorte à accéder auxdites données descriptives de la transaction, et traitement desdites données descriptives de la transaction.

2. Procédé selon la revendication 1, dans lequel l'entité de confiance (3) dispose d'une clé publique maitresse de l'ensemble d'entités créditrices (2a, 2b), l'étape (c) comprenant la dérivation de ladite clé publique de l'entité créditrice cible (2a) à partir de la clé publique maitresse de l'ensemble d'entités créditrices (2a, 2b).

3. Procédé selon la revendication 2, dans lequel un identifiant de l'entité créditrice cible (2a) est transmis à l'entité de confiance (3) à l'étape (a) avec ledit cryptogramme ; la dérivation de ladite clé publique de l'entité créditrice cible (2a) à l'étape (c) utilisant ledit identifiant de l'entité créditrice cible (2a).

4. Procédé selon l'une des revendications 2 et 3, dans lequel ladite clé privée de l'entité créditrice cible (2a) est dérivée à partir d'une clé privée maitresse de l'ensemble d'entités créditrices (2a, 2b).

5. Procédé selon la revendication 4, dans lequel l'entité créditrice cible (2a) et l'entité de confiance (3) ne disposent initialement d'aucune clé, le procédé comprenant la mise en œuvre par les moyens de traitement de données (41) de l'entité d'autorité (4) d'une étape antérieure (a0) de :
∘ dérivation de ladite clé privée de l'entité créditrice cible (2a) à partir de la clé privée maitresse de l'ensemble d'entités créditrices (2a, 2b);
∘ transmission à l'entité créditrice cible (2a) de sa clé privée dérivée et de la clé publique de l'entité d'autorité (4) ;
∘ transmission à l'entité de confiance (3) de la clé publique maitresse de l'ensemble d'entités créditrices (2a, 2b).

6. Procédé selon la revendication 5, dans lequel l'étape (a0) comprend la génération préalable de :
∘ la paire de clés publique et privée de l'entité d'autorité (4) ;
∘ la paire de clés publique et privée maitresses de l'ensemble d'entités créditrices (2a, 2b).

7. Procédé selon l'une des revendications 2 à 6, dans lequel lesdites clés de l'entité créditrice cible (2a) ou de l'ensemble d'entités créditrices (2a, 2b) sont de type hiérarchique déterministe.

8. Procédé selon l'une des revendications 1 à 7, dans lequel lesdites données descriptives de la transaction comprennent un identifiant de l'entité débitrice (1) et un montant de la transaction, éventuellement une information temporelle.

9. Procédé selon la revendication 8, dans lequel lesdites données descriptives de la transaction ne comprennent aucun identifiant de l'entité créditrice cible (2a).

10. Système de traitement d'une transaction effectuée par une entité débitrice (1) auprès d'une entité créditrice cible (2a) d'un ensemble d'entités créditrices (2a, 2b), comprenant ladite entité créditrice cible (2a), une entité de confiance (3) et une entité d'autorité (4) connectées, **caractérisé en ce que** :
∘ l'entité créditrice cible (2a) comprend des moyens de traitement de données (21) configurés pour générer un cryptogramme comprenant des données descriptives de la transaction, ledit cryptogramme étant chiffré en utilisant une clé publique d'une entité d'autorité (4) et signé en utilisant une clé privée de l'entité créditrice cible (2a) ; et transmettre ledit cryptogramme à l'entité de confiance (3) ;
∘ l'entité de confiance (3) comprend des moyens de traitement de données (31) configurés pour vérifier la signature dudit cryptogramme en utilisant une clé publique de l'entité créditrice cible (2a) ; et transmettre le cryptogramme non signé à l'entité d'autorité (4) ;
∘ l'entité d'autorité (4) comprend des moyens de traitement de données (41) configurés pour déchiffrer ledit cryptogramme en utilisant une clé privée de l'entité d'autorité (4) de sorte à accéder auxdites données descriptives de la transaction ; et traiter lesdites données descriptives de la transaction.

11. Produit programme d'ordinateur comprenant des instructions de code pour l'exécution d'un procédé selon l'une des revendications 1 à 9 de traitement d'une transaction effectuée par une entité débitrice (1) auprès d'une entité créditrice cible (2a) d'un ensemble d'entités créditrices (2a, 2b), lorsque ledit procédé est exécuté sur un ordinateur.

12. Moyen de stockage lisible par un équipement informatique sur lequel un produit programme d'ordinateur comprend des instructions de code pour l'exécution d'un procédé selon l'une des revendications 1 à 9 de traitement d'une transaction effectuée par une entité débitrice (1) auprès d'une entité créditrice cible (2a) d'un ensemble d'entités créditrices (2a, 2b).
